# EUROPEAN PATENT APPLICATION

(11) **EP 4 296 165 A1**
(43) Date of publication of application: **27.12.2023**
(21) Application number: 22767233.4
(22) Date of filing: 10.03.2022
(51) Int. Cl.: B64D 11/06, B64D 45/00, G01G 19/52, G01M 1/12, G01B 21/00, B64F 1/36, B64F 5/60

(54) **SEAT DETERMINATION SYSTEM**

(30) Priority: 12.03.2021 JP 2021040053
(71) Applicant: Quintuple Air, Inc., Tokyo 107-0052 (JP)
(72) Inventor: SATSUKAWA, Seiji, Yokohama-shi, Kanagawa 221-0022 (JP); KITAMA, Shoji, Tokyo 107-0052 (JP)
(74) Representative: Schröer, Gernot H.
(86) International application number: PCT/JP2022/010553
(87) International publication number: WO 2022/191279

(57) **Abstract**

A seat determination system according to an embodiment is a seat determination system for determining seat assignment of each of a plurality of passengers in an aircraft including a plurality of seats for passengers, including: a weight measuring unit for measuring an on-board weight of each of passengers to board the aircraft, the on-board weight being a weight to be carried by the aircraft; a calculation unit for calculating a center-of-gravity position of the aircraft when the on-board weights of the passengers are assigned to respective seat positions in each of a plurality of estimated seat assignments; and a selection unit for selecting a seat assignment with the center-of-gravity position being within a predetermined range from among the estimated seat assignments.

## Description

### Technical Field

The present invention relates to a technology for optimizing the position of the center of gravity of a passenger aircraft.

### Background Art

In a passenger drone, the weight of passengers on board makes up a large proportion of the total weight, and the seating positions and the influence of the variations in the weights of the passengers on board on the center of gravity is therefore significant.

Patent Literature 1 teaches a technology of determining seating positions, obtaining the center of gravity on the basis of "weights" written into IC cards that individual passengers hold and the seating positions, notifying the cockpit of the obtained center of gravity, and taking measures to keep the airframe stable by a pilot that has known, before the passengers get seated, the center of gravity of the passenger aircraft in a state in which all the passengers are seated.

### Related Art List

Patent Literature 1: JP S63-068497 A
Patent Literature 2: JP 2020-024123 A

### Summary

### Technical Problem

According to Patent Literature 1, however, it is necessary that all the passengers hold IC cards on which weight information is recorded. Furthermore, there is a problem in that weight information written in an IC card might not be reliable because of omission of update, false registration, or the like.

In addition, Patent Literature 2 teaches that an operation of hoisting an aircraft into the air is included in measurement of the position of the center of gravity of the airframe of the aircraft, which is not suitable for measurement of the position of the center of gravity of a passenger drone.

Furthermore, small aircraft such as passenger drones have conditions different from those of large aircraft in the following respects.
(1) Because the weight of people on board makes up a large proportion of the total weight of the airframe, the control of the position of the center of gravity is important.
(2) Because motor outputs are limited and the maximum takeoff weight is also limited, it is preferable to minimize use of balancers.

The present invention has been achieved on the basis of recognition of the aforementioned problems, and a chief object thereof is to optimize the position of the center of gravity of a passenger aircraft.

### Solution to problem

A seat determination system according to an aspect of the present invention is a seat determination system for determining seat assignment of each of a plurality of passengers in an aircraft including a plurality of seats for passengers, including: a weight measuring unit for measuring an on-board weight of each of passengers to board the aircraft, the on-board weight being a weight to be carried by the aircraft; a calculation unit for calculating a center-of-gravity position of the aircraft when the on-board weights of the passengers are assigned to respective seat positions in each of a plurality of estimated seat assignments; and a selection unit for selecting a seat assignment with the center-of-gravity position being within a predetermined range from among the estimated seat assignments.

An electronic device according to another aspect of the present invention is an electronic device to be worn by a passenger to board an aircraft including a plurality of seats for passengers, including: a reception unit for receiving seat identification information associated with a seat assigned to the passenger; a display for displaying a seat position based on the received seat identification information; and a near field communication unit for providing a notification on the seat identification information by near field communication with a reader provided on the seat.

### Advantageous Effects of Invention

According to the present invention, the position of the center of gravity of a passenger aircraft can be optimized.

### Brief Description of Drawings

FIG. 1 is an external view of a passenger drone.
FIG. 2 is a plan view of a cabin.
FIG. 3 is a side view of a seat space in the cabin.
FIG. 4 is a side view of a weight measurement booth.
FIG. 5 is a configuration diagram of a boarding place LAN (local area network).
FIG. 6 is a configuration diagram of an on-board LAN.
FIG. 7 is a functional block diagram of a seat management server.
FIG. 8 is a data structure table of passenger information.
FIG. 9 is a functional block diagram of an on-board computer.
FIG. 10 is a phase transition diagram.
FIG. 11 is a data structure table of a seating assignment table.
FIG. 12 is a flowchart illustrating processes of seat determination.
FIG. 13 is a plan view of a center-of-gravity adjustment part.
FIG. 14 is a perspective view of the center-of-gravity adjustment part.

### Description of Embodiments

An embodiment of the present invention will now be described in detail with reference to the drawings. In the following embodiment and modifications thereof, components that are substantially the same will be designated by the same reference numerals and redundant description thereof may be omitted as appropriate.

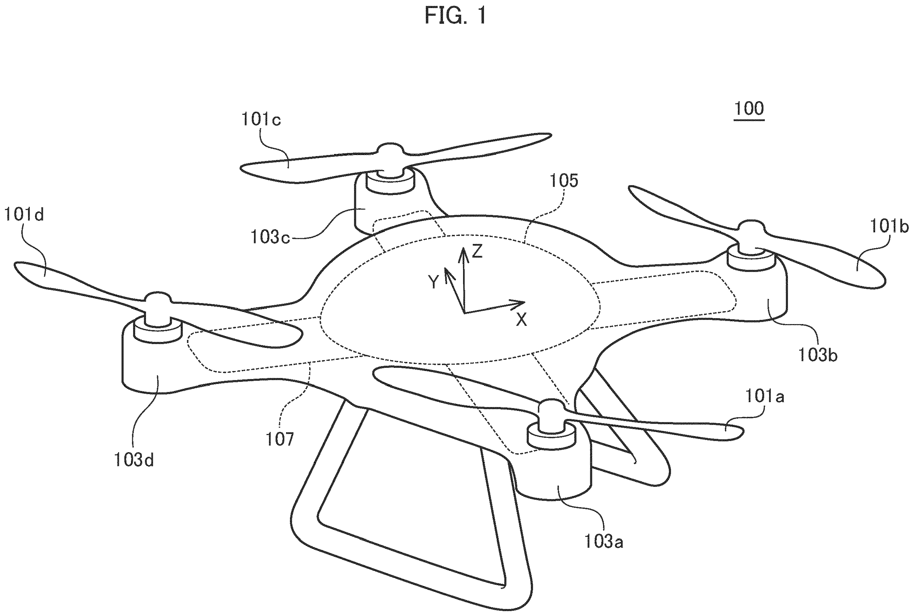

FIG. 1 is an external view of a passenger drone 100.

The present invention relates to an aircraft including a plurality of seats for passengers. The passenger drone 100 is an example of the aircraft. Examples of the aircraft may also include other vertical take-off and landing aircraft such as a tiltrotor aircraft.

The passenger drone 100 includes motors 103a to 103d. The motors 103a to 103d rotate propellers 101a to 101d provided above them. The passenger drone 100 gains lift by the rotation of the propellers 101a to 101d to fly. The passenger drone 100 adjusts the outputs of the individual motors 103a to 103d to keep the flight attitude.

A cabin 105 is provided in an upper part of the body of the passenger drone 100. Assume that the origin of a coordinate system is at the center of the floor surface of the cabin 105. In this example, the direction toward the motor 103b corresponds to the X-axis positive direction. The direction toward the motor 103c corresponds to the Y-axis positive direction. In addition, the upward direction corresponds to the Z-axis positive direction.

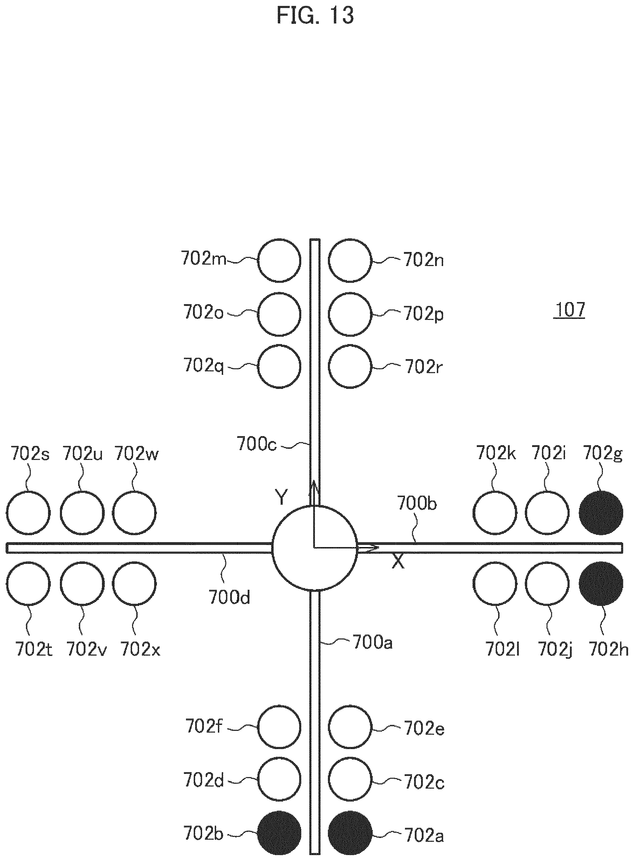

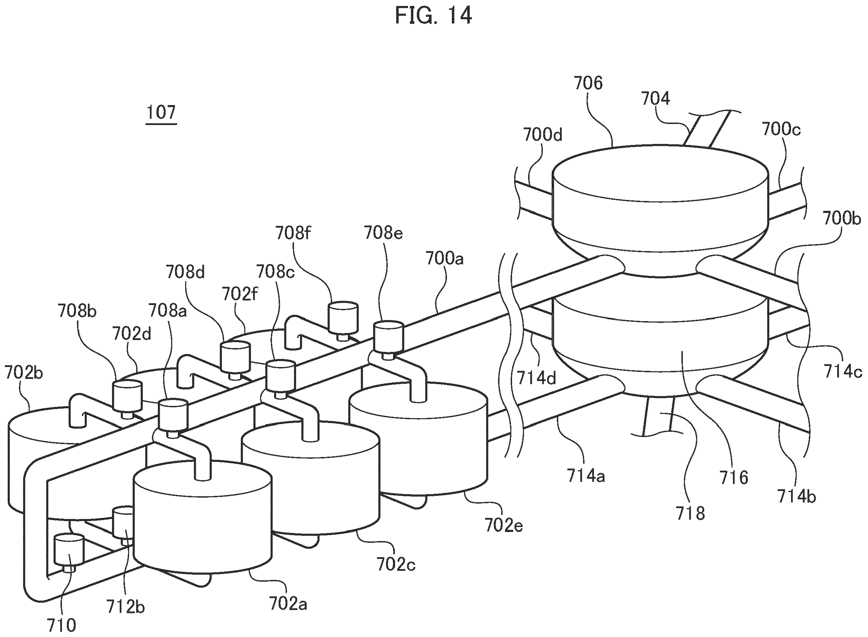

A center-of-gravity adjustment part 107 having a cross-like shape is provided in a lower part of the body of the passenger drone 100. The center-of-gravity adjustment part 107 is a system for applying balancers for balancing the center-of-gravity position of the passenger drone 100 when passengers get on the passenger drone 100. The center-of-gravity adjustment part 107 will be described later with reference to FIGS. 13 and 14.

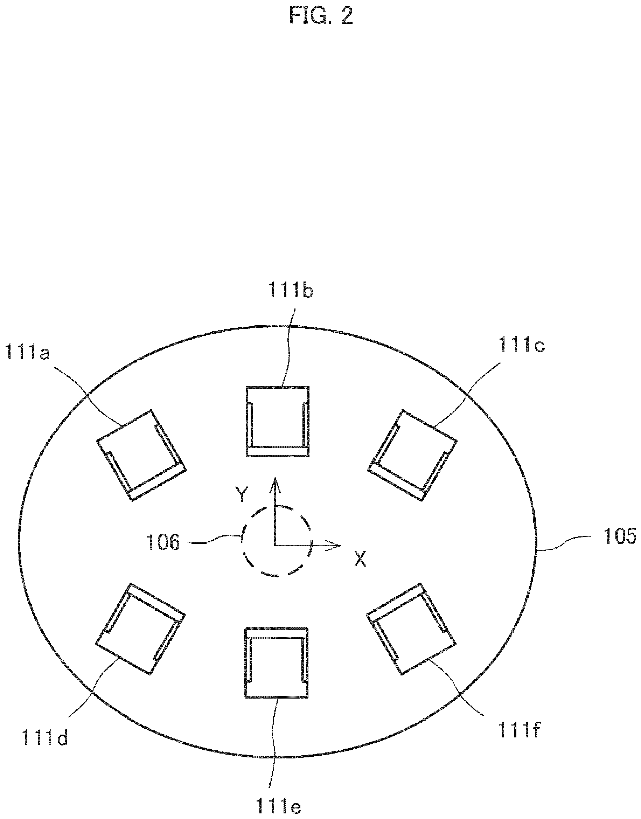

FIG. 2 is a plan view of the cabin 105.

The passenger drone 100 is a six-seater aircraft. Thus, six seats 111 are provided in the cabin 105. In FIG. 2, seats 111a to 111c are arranged on an upper side and seats 111d to 111f are arranged on a lower side. The number of seats 111 may be two to five or seven or larger. In addition, the positions of the seats 111 are set in airframe data, which will be described later.

An acceptable range 106 indicates a range within which the center-of-gravity position of passenger drone 100 with passengers on board is permitted in terms of safety. Thus, flight is permitted when the center-of-gravity position is within this range, and flight is not permitted when the center-of-gravity position is out of this range. Note that, in this example, only the X value and the Y value of the coordinates of the center-of-gravity position are considered. Regarding the Z value, an upper limit is set under the plane of rotation of the propellers and there is no lower limit. The acceptable range 106 is an example of a predetermined range. The predetermined range may be defined on the basis of a criterion other than whether or not the center-of-gravity position is acceptable in terms of safety.

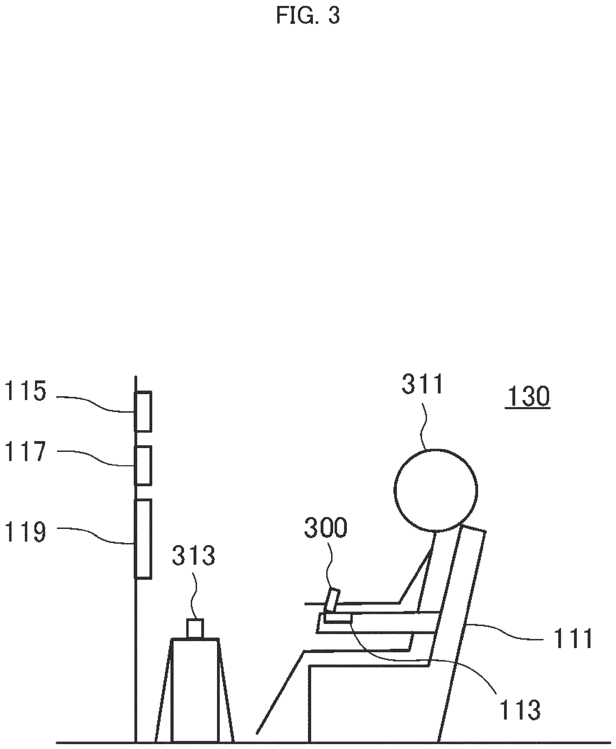

FIG. 3 is a side view of a seat space in the cabin 105.

A passenger 311 is seated on a seat 111. The passenger 311 wears a wristband 300, which is an electronic device, on his/her wrist. The wristband 300 will be described later. A wristband reader 113 for reading data from the wristband 300 is installed in an armrest of the seat 111. On a front surface, which the passenger 311 faces, in the cabin 105, a speaker 115, a camera 117, and a display 119 are installed. The camera 117 performs a checking process of recognizing the face of the passenger 311 and checking whether the face matches up with an image taken by a camera 217, which will be described later. Specifically, an image taken by the camera 117 is used to check whether the passenger 311 is identical to a person captured in a weight measurement booth. The image taken by the camera 117 may be discarded after the checking process. Alternatively, the image may be saved in a file or the like while the passenger is on board, for example. The speaker 115 and the display 119 convey messages to the passenger 311. Note that the passenger 311 secures baggage 313 at his/her feet (at a predetermined position) in the same manner as when the passenger 311 is actually on board.

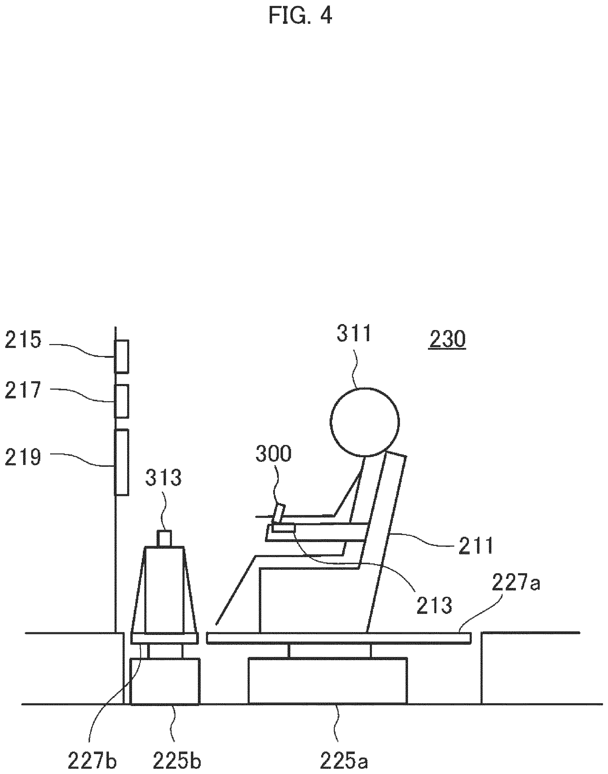

FIG. 4 is a side view of the weight measurement booth.

The seat space illustrated in FIG. 3 is located in the cabin 105, and the weight measurement booth is separately located in a facility of a boarding place. The weight measurement booth is ground equipment for measuring the weight of each passenger 311. A floor part 227a is provided on a weight measurement part 225a, and a measuring seat 211 is placed on the floor part 227a. A floor part 227b with a baggage holder is provided on a weight measurement part 225b. The baggage holder is a band, a net, a basket, or a box, for example. A passenger 311 whose weight is to be measured sits on the measuring seat 211 and secures baggage 313 with the baggage holder. A wristband reader 213 is installed in an armrest of the measuring seat 211. The camera 217 is installed in front of the measuring seat 211. The camera 217 captures the face of the passenger 311. The image taken here is transferred to a seat management server 400, and the checking process is performed as appropriate by the aforementioned camera 117 or an on-board computer 500. The weight measurement part 225a measures the weight of the passenger 311. The measured weight is transmitted to the seat management server 400 by a LAN communication function of the weight measurement part 225a. The weight measurement part 225b measures the weight of the baggage 313 secured at the feet of the passenger 311. The measured weight of the baggage 313 is transmitted to the seat management server 400 by a LAN communication function of the weight measurement part 225b. In this manner, the distribution of weight that the airframe carries in the seat space illustrated in FIG. 3 can be measured in the weight measurement booth.

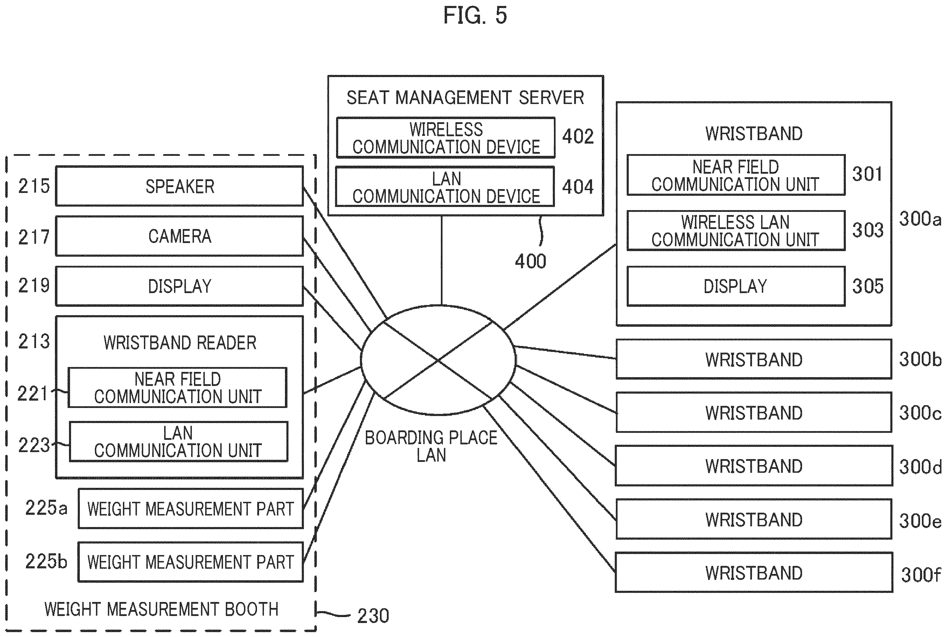

FIG. 5 is a configuration diagram of a boarding place LAN (local area network).

The boarding place LAN is a network installed in the facility of the boarding place for the passenger drone 100. The boarding place LAN may be a wired LAN or a wireless LAN. The seat management server 400 and the weight measurement booth 230 are equipment provided by the operator of the boarding place. The wristband 300 is an article that is lent to each passenger 311 by the operator, which is an example of the electronic device worn by the passenger 311. The wristband 300 is used to notify the passenger 311 of a seat ID, for example.

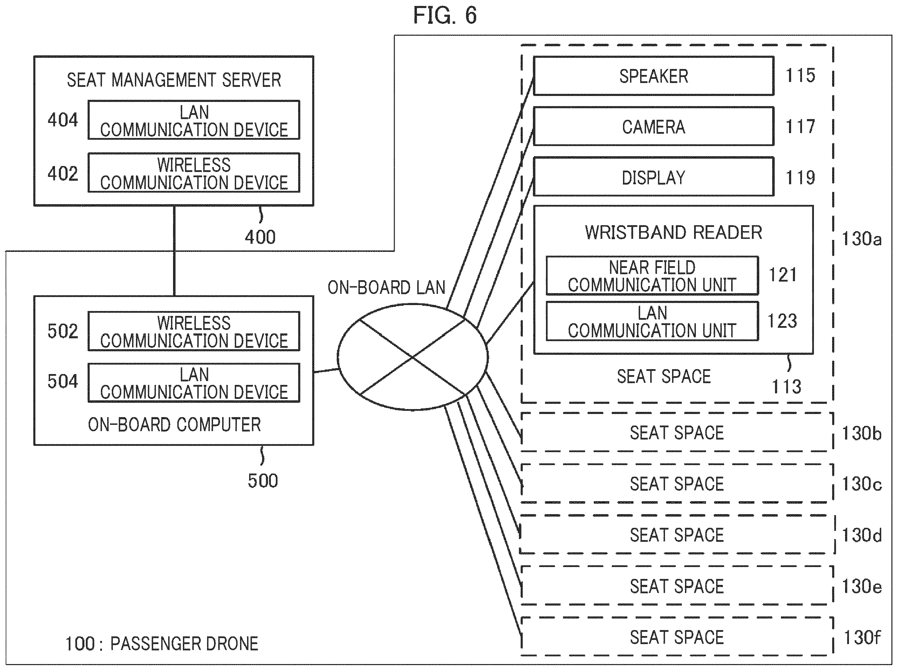

The seat management server 400 determines which seat 111 to be assigned to each passenger 311, that is, seat assignment. The seat management server 400 includes a wireless communication device 402 and a LAN communication device 404. The wireless communication device 402 is used for radio communication with the on-board computer 500 (see FIG. 6) provided in the passenger drone 100. The LAN communication device 404 is used for communication via the boarding place LAN.

In the weight measurement booth 230, the wristband reader 213, a speaker 215, the camera 217, a display 219, the weight measurement part 225a, and the weight measurement part 225b are provided as described above. The speaker 215, the camera 217, the display 219, the weight measurement part 225a, and the weight measurement part 225b each have a LAN communicating function for performing communication via the boarding place LAN. The wristband reader 213 includes a near field communication unit 221 for performing near field communication with the wristband 300, and a LAN communication unit 223 for performing communication via the boarding place LAN.

The wristband 300 includes a near field communication unit 301 for performing near field communication with the wristband reader 213, a wireless LAN communication unit 303 for performing communication via the boarding place LAN, and a display 305 for presenting information such as messages to the passenger 311. In FIG. 5, wristbands 300a to 300f to be lent to six passengers 311 are illustrated.

FIG. 6 is a configuration diagram of an on-board LAN.

The on-board LAN is a network provided in the passenger drone 100. The on-board LAN may be a wired LAN or a wireless LAN. Although a wired LAN is preferable, a wireless LAN may be used as long as no interference is caused. The on-board computer 500 is installed in the passenger drone 100. The on-board computer 500 includes a wireless communication device 502 and a LAN communication device 504. The wireless communication device 502 is used for communication with the seat management server 400. The LAN communication device 504 is used for communication via the on-board LAN.

As described above, the wristband reader 113, the speaker 115, the camera 117, and the display 119 are installed in each seat space 130. The speaker 115, the camera 117, and the display 119 each have a LAN communication function for performing communication via the on-board LAN. The wristband reader 113 includes a near field communication unit 121 for performing near field communication with the wristband 300, and a LAN communication unit 123 for performing communication via the on-board LAN. The LAN communication unit 123 is preferably of a wired LAN system. The seat spaces 130a to 130f correspond to the seats 111a to 111f, respectively, illustrated in FIG. 2. The devices in the seat spaces 130a to 130f are associated with the seats 111a to 111f by the on-board computer 500, and data transmission lines between the devices and the on-board computer 500 are established. Thus, seat IDs are assigned to the individual wristband readers 113, the individual speakers 115, the individual cameras 117, and the displays 119.

The seat determination system includes the seat management server 400, the devices in the weight measurement booth 230, the wristbands 300a to 300f, the on-board computer 500, and the devices in the seat spaces 130a to 130f as described above.

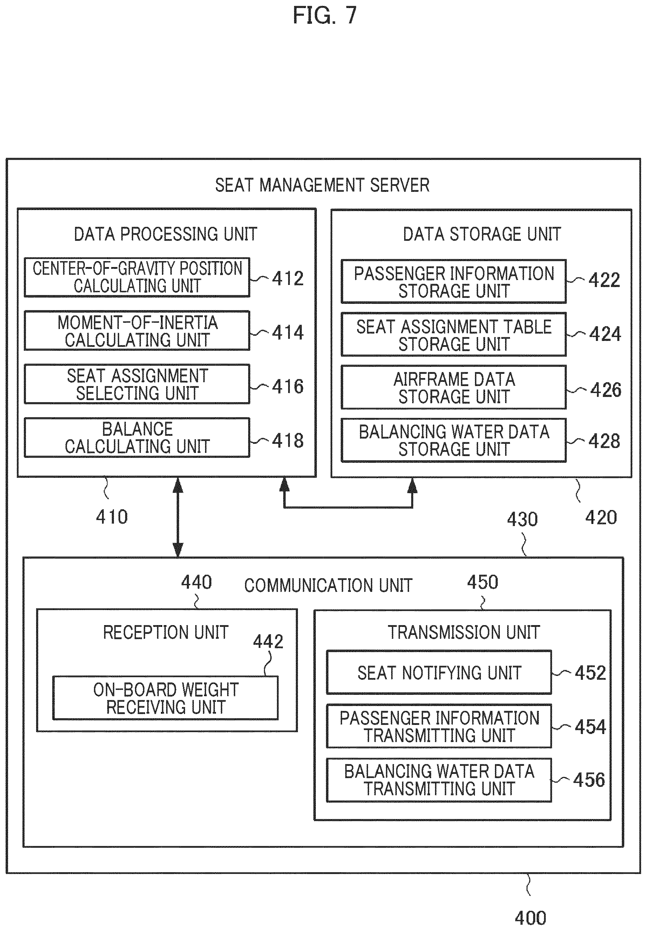

FIG. 7 is a functional block diagram of the seat management server 400.

Components of the seat management server 400 are implemented by hardware including arithmetic units such as central processing units (CPUs) and various co-processors, storage devices such as memories and storages, and wire or wireless communication lines connecting the components, and software, stored in the storage devices, for supplying processing instructions to the arithmetic units. Computer programs may be constituted by device drivers, an Operating System, various application programs on upper layers thereof, and libraries providing common functions to the programs.

The on-board computer 500, which will be described later, is similarly implemented.

The seat management server 400 includes a data processing unit 410, a data storage unit 420, and a communication unit 430. The data storage unit 420 stores various data. The communication unit 430 performs communication processes using the wireless communication device 402 or the LAN communication device 404. The data processing unit 410 performs various processes on the basis of data obtained by the communication unit 430 and data stored in the data storage unit 420. The data processing unit 410 also functions as an interface of the data storage unit 420 and the communication unit 430.

The data processing unit 410 includes a center-of-gravity position calculating unit 412, a moment-of-inertia calculating unit 414, a seat assignment selecting unit 416, and a balance calculating unit 418.

The center-of-gravity position calculating unit 412 calculates the center-of-gravity position of the passenger drone 100. The moment-of-inertia calculating unit 414 calculates the moment of inertia of the passenger drone 100. The seat assignment selecting unit 416 selects the seat assignment of passengers 311 to board the passenger drone 100. The balance calculating unit 418 determines the weights and the positions of balancers (weights) to adjust the center-of-gravity position. In this example, the balance calculating unit 418 generates balancing water data defining balancing water tanks into which water is to be poured in the center-of-gravity adjustment part 107. Note that the water to be poured into the balancing water tanks serves as balancing water for keeping the balance of the airframe. The center-of-gravity adjustment part 107 will be described later.

The data storage unit 420 includes a passenger information storage unit 422, a seat assignment table storage unit 424, an airframe data storage unit 426, and a balancing water data storage unit 428.

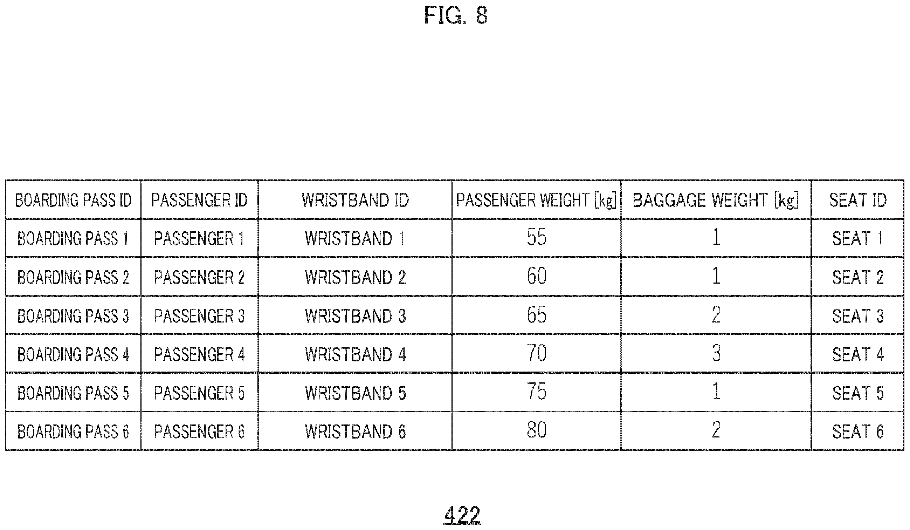

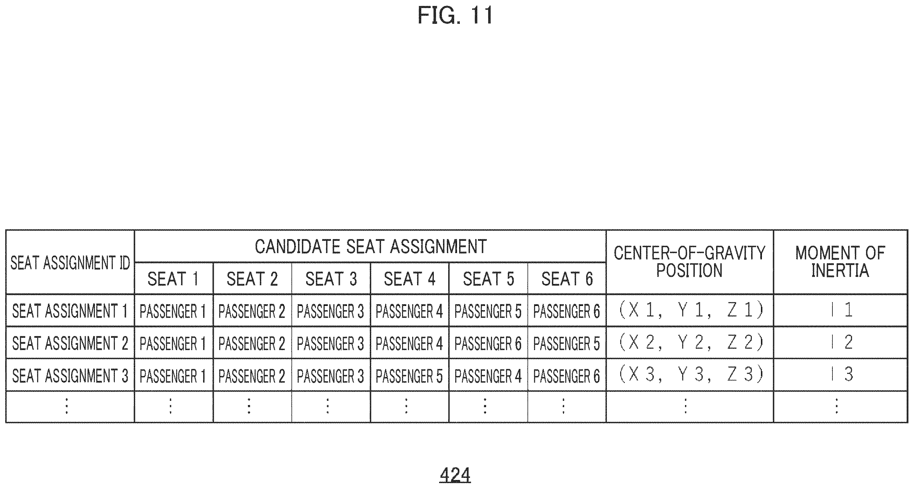

The passenger information storage unit 422 stores passenger information. The passenger information 422 will be described later with reference to FIG. 8. The seat assignment table storage unit 424 stores a seating position table. The seat assignment table will be described later with reference to FIG. 11.

The airframe data storage unit 426 stores weight distribution data and the like of the airframe of the passenger drone 100. The weight distribution data indicates the coordinate values and the weights of respective components included in the airframe of the passenger drone 100. In addition, the weight distribution data also include the coordinate values of passenger spaces of the passengers 311 on the seats 111 in the passenger drone 100, and the coordinate values of baggage spaces of the baggage 313. The weights of the passengers 311 are set for the passenger spaces, and the weights of the baggage 313 are set for the baggage spaces, so that the weight distribution of the whole passenger drone 100 with the passengers 311 seated can be obtained. In default weight distribution data, the weights of the passengers 311 and the weights of the baggage 313 are 0 kg. The weight distribution data also includes the coordinate values of balancing water spaces of individual balancing water tanks 702, which will be described later. Balancing water weights are set for the balancing water spaces, so that the weight distribution of the whole passenger drone 100 when water for adjustment is poured can be obtained. In default weight distribution data, the balancing water weights are 0 kg.

The balancing water data storage unit 428 stores the balancing water data that defines the balancing water tanks 702 into which water is to be poured.

The communication unit 430 includes a reception unit 440 for receiving various data, and a transmission unit 450 for transmitting various data.

The reception unit 440 includes an on-board weight receiving unit 442. The on-board weight receiving unit 442 receives wristband IDs from the wristband reader 213 in the weight measurement booth 230 by using the LAN communication device 404, similarly receives the weights of the passengers from the weight measurement part 225a, and similarly receives the weights of the baggage 313 from the weight measurement part 225b. The sum of the weights of the passengers 311 and the baggage 313 will be referred to as an "on-board weight".

The transmission unit 450 includes a seat notifying unit 452, a passenger information transmitting unit 454, and a balancing water data transmitting unit 456.

The seat notifying unit 452 notifies a wristband 300 that each passenger 311 wears of a seat ID of a seat 111 assigned to the passenger 311 by using the LAN communication device 404. The passenger information transmitting unit 454 transmits the passenger information 422 to the on-board computer 500 by using the wireless communication device 402. The balancing water data transmitting unit 456 transmits the balancing water data to the on-board computer 500 by using the wireless communication device 402.

FIG. 8 is a data structure table of the passenger information 422.

The passenger information 422 includes records for each passenger 311 to board the passenger drone 100. In the records, a boarding pass ID, a passenger ID, a wristband ID, the weight of the passenger 311, the weight of the baggage 313, and a seat ID are set. In this example, boarding passes are issued to six passengers 311 for one flight of one passenger drone 100. A boarding pass ID and a passenger ID are associated with each other before checking in (for example, at purchase or at reservation) . In addition to the passenger ID, the name, the email address, the address, the telephone number, and the like of each passenger 311 may be stored. A wristband ID identifies the wristband 300 lent to a passenger 311. The unit of the weights of the passengers 311 and the baggage 313 is kg. A seat ID identifies a seat 111 assigned to a passenger 311. The seat IDs of the individual passengers 311 are defined by the seat assignment, which will be described later. In addition to the information described above, face image data to be used for face recognition, fingerprint feature data to be used for fingerprint authentication or the like may be included in the passenger information 422.

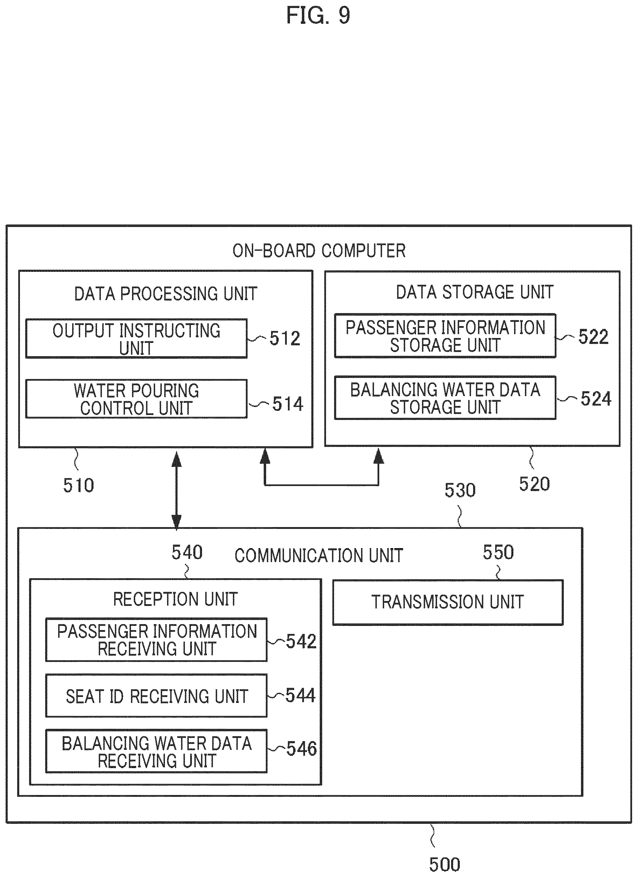

FIG. 9 is a functional block diagram of the on-board computer 500.

The on-board computer 500 includes a data processing unit 510, a data storage unit 520, and a communication unit 530, the data storage unit 520 stores various data. The communication unit 530 performs communication processes using the wireless communication device 502 and the LAN communication device 504. The data processing unit 510 performs various processes on the basis of data obtained by the communication unit 530 and data stored in the data storage unit 520. The data processing unit 510 also functions as an interface of the data storage unit 520 and the communication unit 530.

The data processing unit 510 includes an output instructing unit 512 and a water pouring control unit 514.

The output instructing unit 512 determines whether or not each passenger 311 is seated on the correct seat 111, and sends an instruction to output a warning notice to a passenger 311 on a wrong seat 111 to the speaker 115 and the display 119 in the corresponding seat space 130. The water pouring control unit 514 controls water pouring operation on the center-of-gravity adjustment part 107. The water pouring operation on the center-of-gravity adjustment part 107 will be described later.

The data storage unit 520 includes a passenger information storage unit 522 and a balancing water data storage unit 524.

The passenger information storage unit 522 stores passenger information received from the seat management server 400. The balancing water data storage unit 524 stores balancing water data received from the seat management server 400.

The communication unit 530 includes a reception unit 540 for receiving various data, and a transmission unit 550 for transmitting various data.

The reception unit 540 includes a passenger information receiving unit 542, a seat ID receiving unit 544, and a balancing water data receiving unit 546.

The passenger information receiving unit 542 receives passenger information from the seat management server 400 by using the wireless communication device 502. The seat ID receiving unit 544 receives seat IDs read by the wristband readers 113 in the seat spaces 130 by using the LAN communication device 504. The balancing water data receiving unit 546 receives balancing water data from the seat management server 400 by using the wireless communication device 502.

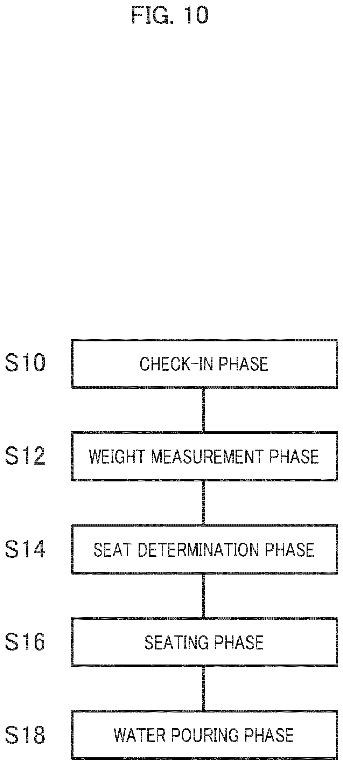

FIG. 10 is a phase transition diagram illustrating processes (phases) of passenger boarding.

FIG. 10 illustrates a flow from arrival of a passenger 311 at the boarding place until the passenger gets on the passenger drone 100 and the passenger drone 100 is ready for flight. A check-in phase (S10), a weight measurement phase (S12), a seat determination phase (S14), a seating phase (S16), and a water pouring phase (S18) will be sequentially explained.

In the check-in phase (S10), a wristband 300 is lent to each passenger 311. In this process, the wristband ID is stored in association with the passenger ID into the passenger information 422. The passenger 311 wears the received wristband 300 on his/her wrist.

In the weight measurement phase (S12), a passenger 311 that has completed the check-in goes for measurement of his/her weight and the weight of the baggage 313 in the weight measurement booth. As illustrated in FIG. 4, the passenger 311 sits on the measuring seat 211. At this point, the passenger 311 puts the baggage 313 on the floor part 227b near the feet.

The wristband reader 213 of the weight measurement booth 230 reads the wristband ID from the wristband 300 on the wrist of the passenger 311. The wristband 300 stores the wristband ID in a storage unit (not illustrated), and the near field communication unit 301 transmits the wristband ID to the wristband reader 213 via near field communication. The near field communication unit 221 of the wristband reader 213 receives the wristband ID. The LAN communication unit 223 of the wristband reader 213 transmits the read wristband ID to the seat management server 400.

The weight measurement part 225a of the weight measurement booth 230 measures the weight of the passenger 311 including clothes, and the weight measurement part 225b measures the weight of the baggage 313. The weight measurement part 225a may calculate the weight of the passenger 311 by measuring the weight including the weights of the measuring seat 211 and the floor part 227a and subtracting the weights of the measuring seat 211 and the floor part 227a from the measured weight or measure the weight of the passenger 311 excluding the weights of the measuring seat 211 and the floor part 227a. The weight measurement part 225a transmits the weight of the passenger 311 to the seat management server 400 by using the LAN communication function. The weight measurement part 225b may calculate the weight of the baggage 313 by measuring the weight including the weights of the baggage holder and the floor part 227b and subtracting the weights of the baggage holder and the floor part 227b from the measured weight or measure the weight of the baggage 313 excluding the weights of the baggage holder and the floor part 227b. The weight measurement part 225b transmits the weight of the baggage 313 to the seat management server 400 by using the LAN communication function.

The on-board weight receiving unit 442 of the seat management server 400 receives the wristband ID, the weight of the passenger 311, and the weight of the baggage 313, and stores the weight of the passenger 311 and the weight of the baggage 313 in the records including the wristband ID in the passenger information storage unit 422.

In this manner, the weight of the passenger 311 and the weight of the baggage 313 to be carried by the passenger drone 100 are measured in the weight measurement booth 230 for each of the passengers 311 to board the aircraft, and are managed as weight distribution in the seat management server 400.

In the seat determination phase (S14), the seat management server 400 generates a seat assignment table 424, and determines the seat assignment in which the seats 11 are assigned to the individual passengers 311.

FIG. 11 is a data structure table of the seat assignment table 424.

The seat assignment table 424 includes records for each candidate seat assignment. A seat assignment ID identifies a candidate seat assignment. A candidate seat assignment is constituted by passenger IDs associated with the seat IDs identifying the individual seats 111. A candidate seat assignment is obtained as an ordered arrangement (permutation) of n seats to be assigned to n passengers 311 out of m seats 111. In other words, estimated seat assignments are obtained by permutations. In this example, seat assignments are obtained by assigning six passengers to six seats 111. In this case, 6×5×4×3×2×1=720 patterns of seat assignments are estimated. In a case where the number of passengers 311 is four, 6×5×4×3=360 patterns of seat assignments are estimated. A seat 111 on which no one will be seated is set as "empty". The center-of-gravity position refers to the center-of-gravity position of the passenger drone 100 in a state in which the weights of the passengers 311 and the weights of the baggage 313 are assigned to the passenger spaces and the baggage spaces, respectively, in the seat assignment. The moment of inertia refers to the moment of inertia of the passenger drone 100 in a state in which the weights of the passengers 311 and the weights of the baggage 313 are assigned to the passenger spaces and the baggage spaces, respectively, in the seat assignment.

An example of first records indicates that, in a seat assignment with the seat assignment ID: seat assignment 1, a passenger 1 is assigned to a seat 1, a passenger 2 is assigned to a seat 2, a passenger 3 is assigned to a seat 3, a passenger 4 is assigned to a seat 4, a passenger 5 is assigned to a seat 5, and a passenger 6 is assigned to a seat 6. In addition, in this seat assignment, the center-of-gravity position is (X1, Y1) and the moment of inertia is 11. While all the seat assignments that can be logically estimated by permutations are candidates in this example, candidate seat assignments may be estimated regardless of permutations.

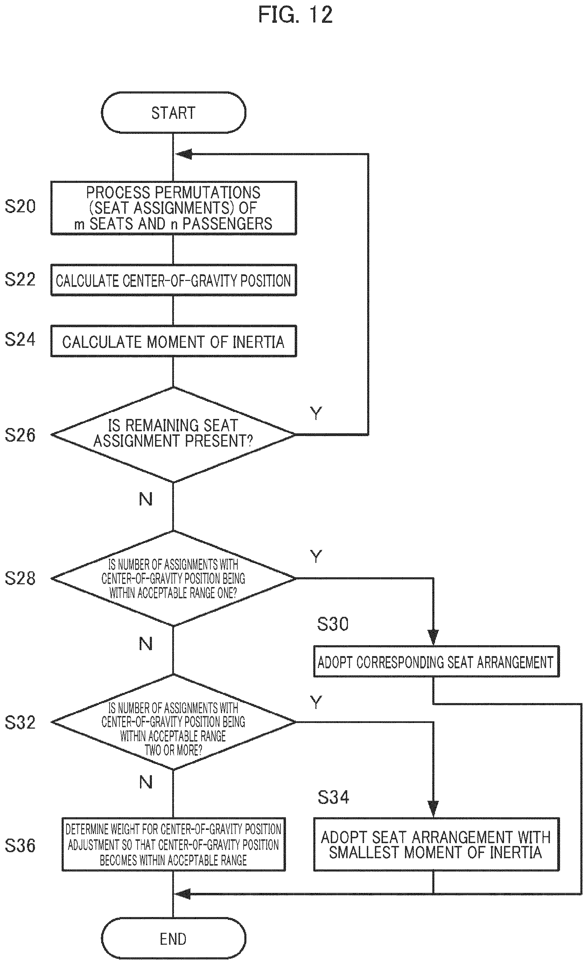

FIG. 12 is a flowchart illustrating processes of seat determination.

In the seat determination phase (S14), the center-of-gravity position calculating unit 412 obtains candidate seat assignments as ordered arrangements (permutations) of n seats to be assigned to n passengers 311 out of m seats 111 as described above. Thus, seat assignment IDs and seat assignments are set in the seat assignment table 424. Then, the following processes are performed for each of the seat assignments (S20).

The center-of-gravity position calculating unit 412 calculates the center-of-gravity position of the passenger drone 100 in a state in which all the passengers 311 are seated in accordance with the seat assignment (S22). Specifically, the center-of-gravity position calculating unit 412 sets the weights of the passengers 311 assigned to the seats 111 in the passenger spaces of the corresponding seats 111 in the weight distribution data, and sets the weights of the baggage 313 in the baggage spaces of the corresponding seats 111 in the weight distribution data. The center-of-gravity position calculating unit 412 then obtains the center-of-gravity position of the passenger drone 100 according to the weight distribution data in which the weights of all the passengers 311 and the weights of the baggage 313 are set. A known technology may be used for the method for calculating the center-of-gravity position according to weight distribution data. The calculated center-of-gravity position is stored in association with the seat assignment in the seat assignment table 424.

The moment-of-inertia calculating unit 414 calculates the moment of inertia of the passenger drone 100 in a state in which all the passengers 311 are seated in accordance with the seat assignment (S24). Specifically, the moment-of-inertia calculating unit 414 obtains the moment of inertia of the passenger drone 100 according to the weight distribution data in which the weights of all the passengers 311 and the weights of the baggage 313 are set as described above. A known technology may be used for the method for calculating the moment of inertia according to weight distribution data. The calculated moment of inertia is stored in association with the seat assignment in the seat assignment table 424.

If an unprocessed seat assignment remains (Y in S26), the process returns to S20 and the processes described above are repeated for a next seat assignment. If the processes have been performed for all the candidate seat assignments (N in S26), the seat assignment selecting unit 416 refers to the seat assignment table 424 and determines whether there is a candidate seat assignment with the center-of-gravity position being within the acceptable range 106.

If the number of candidate seat assignments with the center-of-gravity position being within the acceptable range 106 is one (Y in S28), the seat assignment selecting unit 416 adopts this candidate seat assignment as the determined seat assignment (S30).

If the number of candidate seat assignments with the center-of-gravity position being within the acceptable range 106 is two or more (Y in S32), the seat assignment selecting unit 416 preferentially adopts a candidate seat assignment with the smallest moment of inertia among these candidate seat assignments as the determined seat assignment (S34). A smaller moment of inertia is advantageous in terms of safety in that it is easier to control the attitude of the passenger drone 100. Note that any of the two or more candidate seat assignments may be selected. Alternatively, a candidate seat assignment may be selected on the basis of a criterion other than the moment of inertia.

If no candidate seat assignment with the center-of-gravity position being within the acceptable range 106 is present (N in S32), balance adjustment of the center-of-gravity position is performed. For example, a candidate seat assignment with the center-of-gravity position being closest to the acceptable range 106 is adopted, and balance adjustment of the center-of-gravity position is performed on the basis of the distribution of the weights of the passengers 311 and the weights of the baggage 313 in the seat assignment. Any method may be used for the balance adjustment of the center-of-gravity position. For example, the positions of balancers may be fixed, and the balance adjustment of the center-of-gravity position may be performed by adjusting only the values of weights to be added. Alternatively, the balance adjustment may be performed by an operator by specifying the weights and the positions of balancers and checking whether the center-of-gravity position is appropriate. Still alternatively, the balance calculating unit 418 may automatically perform calculation for the balance adjustment. In this example, water is stored in balancing water tanks, and the water weights are used for the balance adjustment of the center-of-gravity position. Specifically, the balance calculating unit 418 determines the weights and the positions of balancers for balance adjustment of the center-of-gravity position so that the center-of-gravity position becomes within the acceptable range 106 (S36). As a method other than that using balancing water, metal blocks or the like may be used as balancers for balance adjustment.

FIG. 13 is a plan view of the center-of-gravity adjustment part.

In the center-of-gravity adjustment part 107 illustrated in FIG. 1, a feed pipe 700a is arranged in an arm toward the motor 103a (the Y-axis negative direction), a feed pipe 700b is arranged in an arm toward the motor 103b (the X-axis positive direction), a feed pipe 700c is arranged in an arm toward the motor 103c (the Y-axis positive direction), and a feed pipe 700d is arranged in an arm toward the motor 103d (the X-axis negative direction). Furthermore, balancing water tanks 702a to 702x that store water drawn from the feed pipes 700a to 700d are arranged. A structure relating to water feed and drainage will be described later with reference to FIG. 14. The operation of the balancers for balance adjustment of the center-of-gravity position will now be explained.

Balancing water tanks 702a to 702f are arranged in the arm toward the motor 103a (the Y-axis negative direction). Balancing water tanks 702g to 7021 are arranged in the arm toward the motor 103b (the X-axis positive direction). Balancing water tanks 702m to 702r are arranged in the arm toward the motor 103c (the Y-axis positive direction). Balancing water tanks 702s to 702x are arranged in the arms toward the motor 103d (the X-axis negative direction).

For example, in a case where the center-of-gravity position is deviated in the X-axis negative direction, water is collected into any of the balancing water tanks 702g to 7021 in the arm toward the motor 103b (the X-axis positive direction). In this example, 100% of the balancing water is collected into the balancing water tanks 702g and 702h represented by black circles to make the X value of the center-of-gravity position closer to 0. Conversely, in a case where the center-of-gravity position is deviated in the X-axis positive direction, water is collected into any of the balancing water tanks 702s to 702x in the arm toward the motor 103d (the X-axis negative direction) to make the X value of the center-of-gravity position closer to 0.

In addition, in a case where the center-of-gravity position is deviated in the Y-axis positive direction, water is collected into any of the balancing water tanks 702a to 702f in the arm toward the motor 103a (the Y-axis negative direction). In this example, 100% of the balancing water is collected into the balancing water tanks 702a and 702b represented by black circles to make the Y value of the center-of-gravity position closer to 0. Conversely, in a case where the center-of-gravity position is deviated in the Y-axis negative direction, water is collected into any of the balancing water tanks 702m to 702r in the arm toward the motor 103c (the Y-axis positive direction) to make the Y value of the center-of-gravity position closer to 0. Water is not poured into the balancing water tanks 702m, etc. represented by white circles in FIG. 13.

The balance calculating unit 418 holds therein balancing water patterns defining which balancing water tanks 702 to pour into depending on the center-of-gravity position. The balance calculating unit 418 adopts a seat assignment with the center-of-gravity position being closest to the acceptable range 106 among candidate seat assignments, and selects a balancing water pattern depending on the center-of-gravity position, for example. Then, the balance calculating unit 418 further selects balancing water tanks 702 into which water is to be poured on the basis of the weight distribution data in which all the weights of the passengers 311 and all the weights of the baggage 313 are set according to the seat assignment and further on the basis of the balancing water pattern, and calculates an adjusted center-of-gravity position on the basis of the weight distribution data. After checking that the center-of-gravity position obtained by the balance adjustment is within the acceptable range 106, the balance calculating unit 418 adopts the balancing water pattern as the balancing water data. Note that coexistence of water and air in a balancing water tank 702 is not preferable because the behavior of the internal water causes the center of gravity to change (a so-called sloshing phenomenon). A structure in which a number of small balancing water tanks are provided and used only in a full state (a balancing water storage of 100%) or in an empty state (a balancing water storage of 0%) is therefore desirable.

In a case where the center-of-gravity position adjusted by the balancing water pattern is not close enough to the acceptable range 106, the number of selected balancing water tanks 702 may be increased or a selected balancing water tank 702 may be switched to another balancing water tank 702 that is farther from the center. In a case where the center-of-gravity position adjusted by the balancing water pattern has moved beyond the acceptable range 106, the number of selected balancing water tanks 702 may be decreased or a selected balancing water tank 702 may be switched to another balancing water tank 702 that is closer to the center. In this manner, the balancing water pattern may be modified so that the center-of-gravity position becomes within the acceptable range 106. In this case, the modified balancing water pattern is adopted as the balancing water data.

In the balancing water data, identifiers of the balancing water tanks 702 into which water is to be poured are set. The balancing water data is stored in the balancing water data storage unit 428. The balancing water data is an example of balancing data defining the weights and the positions of balancers for center-of-gravity adjustment. Assume that the weights of balancing water to be poured into individual balancing water tanks 702 are known.

At a point when the seat assignment is determined by the processes of seat determination illustrated in FIG. 12, seat IDs are set in the passenger information 422. In the example of FIG. 8, the seat assignment with the seat assignment ID: seat assignment 1 is determined among the seat assignment candidates illustrated in FIG. 11.

Subsequently, each passenger 311 is notified of the seat ID assigned thereto. The wristband 300 is used as means for notification. Thus, the seat notifying unit 452 of the seat management server 400 performs the following processes on the respective records of the passenger information 422. The seat notifying unit 452 identifies the wristband 300 worn by the passenger 311 associated with a passenger ID, and transmits the seat ID to the wristband 300 by using the LAN communication device 404. The wireless LAN communication unit 303 of the wristband 300 receives the seat ID and stores it in the storage unit (not illustrated). The display 305 of the wristband 300 displays the seat ID. As a result, the passenger 311 gets to know the seat 111 to sit on. While the seat position is indicated by the seat ID in this example, the seat position may be indicated by a layout plan or the like.

In addition, the seat management server 400 transmits the passenger information 422 to the on-board computer 500. Specifically, the passenger information transmitting unit 454 of the seat management server 400 transmits the passenger information to the on-board computer 500 by using the wireless communication device 402. The passenger information receiving unit 542 of the on-board computer 500 receives the passenger information by using the wireless communication device 502 and stores the passenger information into the passenger information storage unit 522.

When the balancing water data is generated, the seat management server 400 transmits the balancing water data to the on-board computer 500. Specifically, the balancing water data transmitting unit 456 of the seat management server 400 transmits the balancing water data to the on-board computer 500 by using the wireless communication device 402. The balancing water data receiving unit 546 of the on-board computer 500 receives the balancing water data by using the wireless communication device 502, and stores the balancing water data into the balancing water data storage unit 524. At this point, it is ready to let the passengers 311 start boarding.

The seating phase (S16) will now be explained. A seat ID is shown on each seat 111. Each passenger 311 boarding the passenger drone 100 finds the seat 111 with the seat ID displayed on the display 305 of the wristband 300, and gets seated as illustrated in FIG. 3.

The wristband reader 113 in each seat space 130 reads the seat ID from the wristband 300 worn on the wrist of the passenger 311. Specifically, the near field communication unit 301 of the wristband 300 transmits the seat ID stored in the storage unit (not illustrated) to the wristband reader 113, and the near field communication unit 121 of the wristband reader 113 receives the seat ID. The LAN communication unit 123 of the wristband reader 113 transmits the seat ID read from the wristband 300 to the on-board computer 500.

The seat ID receiving unit 544 of the on-board computer 500 receives the seat ID transmitted from the wristband reader 113 by using the LAN communication device 504. In this process, the seat ID receiving unit 544 identifies the wristband reader 113 that is the transmission source, and determines at which seat 111 the seat ID has been read.

The output instructing unit 512 determines whether or not the passenger 311 is seated on the correct seat 111. Specifically, if the seat ID received by the seat ID receiving unit 544 matches the seat ID of the seat 111 of the wristband reader 113 that is the transmission source, the output instructing unit 512 determines that the passenger 311 is seated on the correct seat 111. In this case, no notification is provided to the passenger 311.

In contrast, if the seat ID received by the seat ID receiving unit 544 does not match the seat ID of the seat 111 of the wristband reader 113 that is the transmission source, the output instructing unit 512 determines that the passenger 311 is seated on a wrong seat 111. In this case, the output instructing unit 512 notifies the passenger 311 of the seating position being wrong. The speaker 115 and the display 119 in the seat space 130 are used as means for notification.

Thus, when it is determined that the passenger 311 is seated on a wrong seat 111, the output instructing unit 512 instructs the speaker 115 in the seat space 130 associated with the wristband reader 113 that is the source of transmission of the seat ID to provide a notification on the seating position being wrong. The notification instruction is transmitted from the LAN communication device 504 via the on-board LAN. The speaker 115 in receipt of the notification instruction of the seating position being wrong outputs a notification on the seating position being wrong. For example, the speaker 115 outputs such audio saying, "You are seated on a wrong seat.", "Are you Mr./Ms. XXX? Please be seated on the seat with seat ID YYY." or the like. The output instructing unit 512 also instructs the display 119 in the seat space 130 associated with the wristband reader 113 that is the source of transmission of the seat ID to provide a notification on the seating position being wrong. The notification instruction is also transmitted from the LAN communication device 504 via the on-board LAN. The display 119 in receipt of the notification instruction of the seating position being wrong outputs a notification on the seating position being wrong. For example, the display 119 displays a message saying, "You are seated on a wrong seat.", "Are you Mr./Ms. XXX? Please be seated on the seat with seat ID YYY." or the like. The passenger 311 notified that the seating position is wrong checks the seat ID displayed on the wristband 300, and moves to the correct seat 111.

During flight after the passengers 311 got seated, the camera 117 recognizes the face of each passenger 311 and continuously performs the checking process of checking whether the face matches the image obtained by capturing the person wearing the wristband 300 by the camera 217 in the weight measurement booth. Alternatively, a checking unit (not illustrated) of the on-board computer 500 may obtain a face image from the camera 117 and perform the checking process. If the checking result is negative, the face is not identical to that of the person captured in the weight measurement booth. This means that the wristband has been replaced. In this case, the negative checking result is transmitted from the camera 217 to the on-board computer 500. When the reception unit 540 of the on-board computer 500 has received the negative checking result, the output instructing unit 512 transmits a notification that the worn wristband is wrong to the speaker 115 in the seat space 130 from which the negative checking result has been transmitted. The notification instruction is transmitted from the LAN communication device 504 via the on-board LAN. The speaker 115 in receipt of the notification information of the worn wristband being wrong outputs a notification of the worn wristband being wrong. For example, the speaker 115 outputs such audio saying, "You are seated on a wrong seat.", "Are you Mr./Ms. XXX? Please be seated on the seat with seat ID YYY." or the like. The output instructing unit 512 also transmits a notification that the worn wristband is wrong to the display 119 in the seat space 130 from which the negative checking result has been transmitted. The notification instruction is transmitted from the LAN communication device 504 via the on-board LAN. The display 119 in receipt of the notification instruction of the worn wristband being wrong outputs a notification of the worn wristband being wrong. For example, the display 119 displays a message saying, "You are seated on a wrong seat.", "Are you Mr./Ms. XXX? Please be seated on the seat with seat ID YYY." or the like. In this manner, a swap of wristbands 300 between passengers can be detected and a warning can be provided.

In the water pouring phase (S18), when the weights of balancers for balancing the center-of-gravity position are set in the balancing water data received by the on-board computer 500, water is poured into the balancing water tanks 702. The water pouring is controlled by the on-board computer 500.

FIG. 14 is a perspective view of the center-of-gravity adjustment part 107.

In particular, regarding the center-of-gravity adjustment part 107, FIG. 14 illustrates a structure of the arm in the Y-axis negative direction near the motor 103a and a structure of the central part of the cross-like shape. Note that the other arms have similar structures.

The water pouring control unit 514 of the on-board computer 500 can operate opening and closing of motor-operated valves in the center-of-gravity adjustment part 107, and can further instruct to start and end water pouring through an inlet 704.

Before starting pouring water, the water pouring control unit 514 closes all of drain-side motor-operated valves 712 provided at lower connector pipes between the respective balancing water tanks 702a to 702f and a drain pipe 714a. While only a drain-side motor-operated valve 712b provided at a lower connector pipe of the balancing water tank 702b is illustrated in FIG. 14, drain-side motor-operated valves 712a, 712c to 712f are also provided at lower connector pipes of the other balancing water tanks 702a, 702c to 702f, respectively, and the drain-side motor-operated valves are all closed. In addition, the water pouring control unit 514 also closes an end-side motor-operated valve 710 at the end of the drain pipe 714a.

The water pouring control unit 514 also closes all of feed-side motor-operated valves 708 provided at upper connector pipes between the balancing water tanks 702 into which water is not to be poured and the feed pipe 700a. In the balancing water example illustrated in FIG. 13, the water pouring control unit 514 closes the feed-side motor-operated valves 708c to 708f. On the other hand, the water pouring control unit 514 opens the feed-side motor-operated valves 708 provided at the upper connector pipes between the balancing water tanks 702 into which water is to be poured and the feed pipe 700a.

In this state, the water pouring control unit 514 starts pouring water through the inlet 704. The inflowing water is temporarily stored in a feed tank 706, and flows toward the leading end through the feed pipe 700a. Water does not flow into the balancing water tanks 702 into which water is not to be poured because the feed-side motor-operated valves 708 thereof are closed. In contrast, water flows into the balancing water tanks 702 into which water is to be poured because the feed-side motor-operated valves 708 thereof are open. In the example illustrated in FIG. 13, water flows into the balancing water tank 702a and the balancing water tank 702b. Because the drain-side motor-operated valve 712a of the balancing water tank 702a and the drain-side motor-operated valve 712b of the balancing water tank 702b are closed, the inflowing water is stored in the balancing water tank 702a and the balancing water tank 702b. Similarly, water is also stored in the balancing water tank 702g and the balancing water tank 702h.

After all of the balancing water tanks 702 into which water is to be poured are filled with water, excess water is discharged. When all of the balancing water tanks 702 into which water is to be poured are filled with water, the water level in the feed tank 706 starts to rise. Upon detecting the water level rise in the feed tank 706 by a sensor (not illustrated) provided in the feed tank 706, the water pouring control unit 514 terminates pouring water through the inlet 704.

After stopping pouring water through the inlet 704, the water pouring control unit 514 opens the end-side motor-operated valve 710. This operation causes excess water in the feed tank 706 and the feed pipe 700a to flow through the drain pipe 714a and a drain tank 716 and be discharged through an outlet 718.

After a flight, all of the drain-side motor-operated valves 712 are opened, so that all of the balancing water tanks 702 become empty.

In this manner, water is poured into balancing water tanks 702 in accordance with the balancing water data, and the balance adjustment of the center-of-gravity position can thus be automated.

### [First Modification]

In a case of boarding of a group of friends or family, a plurality of passengers 311 may want to sit next to each other. A condition that such passengers 311 take seats next to each other may be accepted. Specifically, at reservation of boarding passes, at purchase of boarding passes, or at the check-in phase (S10), a condition that a plurality of passengers 311 take seats next to each other is accepted. The accepted condition of seats next to each other is added into the passenger information 422.

For example, when a passenger 311a with a passenger ID: passenger 1 and a passenger 311b with a passenger ID: passenger 2 have requested seats next to each other, seat assignments in which passenger IDs: passenger 1 and passenger 2 are assigned to seat IDs: seat 1 and seat 2 meet the condition of seats next to each other. In addition, seat assignments in which passenger IDs: passenger 1 and passenger 2 are assigned to seat IDs: seat 2 and seat 3, seat assignments in which passenger IDs: passenger 1 and passenger 2 are assigned to seat IDs: seat 4 and seat 5, and seat assignments in which passenger IDs: passenger 1 and passenger 2 are assigned to seat IDs: seat 5 and seat 6 meet the condition of seats next to each other. Three or more passengers may request seats next to each other.

In the processes of seat determination (FIG. 12) in the seat determination phase (S14), seat assignment candidates are narrowed down to those meeting such a condition of seats next to each other. In the process in S20, the center-of-gravity position calculating unit 412 removes seat assignments that do not meet the condition of seats next to each other from the seat assignments obtained by permutations. In this manner, priority can be given to seat assignments meeting the condition of seats next to each other.

If the center-of-gravity position is not within the acceptable range 106 in any of the seat assignments meeting the condition of seats next to each other, the balance adjustment of the center-of-gravity position is performed on the basis of one of the seat assignments that meet the condition of seats next to each other. Under such a special circumstance that the total weight exceeds a limit as a result of the balance adjustment of the center-of-gravity position, however, a seat assignment that does not meet the condition of seats next to each other may be adopted. In this case, a notification that the request for seats next each other cannot be met may be provided to and displayed on the wristbands 300 of the passengers 311 who made the request.

### [Second Modification]

A passenger 311 may be allowed to specify a seat 111. Specifically, at reservation of a boarding pass, at purchase of a boarding pass, or at the check-in phase (S10), a choice of seat of a passenger 311 is accepted. The chosen seat is added into the passenger information 422.

Choices of seats of all the passengers may be accepted, and only balance adjustment of the center-of-gravity position based on the weights of the passengers and the weights of the baggage may be performed. In this case, however, the total weight becomes heavy as a result of the balance adjustment of the center-of-gravity position in this case. Therefore, only choices of seats of some of the passengers 311 may be accepted, so that balance adjustment of the center-of-gravity position based on seat assignment can be performed. For example, a seat choice accepting unit (not illustrated) may accept a predetermined number of choices of seats on a first-come-first-served basis at check-in. In a case where choices of seats of two out of six passengers 311 are accepted, choices of seats of the remaining four passengers 311 may not be accepted.

In the processes of seat determination (FIG. 12) in the seat determination phase (S14), seat assignment candidates are narrowed down to those meeting the condition of chosen seats. In the process in S20, the center-of-gravity position calculating unit 412 removes seat assignments that do not meet the condition of chosen seats from the seat assignments obtained by permutations. In this manner, priority can be given to seat assignments meeting the chosen seats.

If the center-of-gravity position is not within the acceptable range 106 in any of the seat assignments meeting the condition of chosen seats, the balance adjustment of the center-of-gravity position is performed on the basis of one of the seat assignments that meet the condition of chosen seats. Under such a special circumstance that the total weight exceeds a limit as a result of the balance adjustment of the center-of-gravity position, however, a seat assignment that does not meet the condition of chosen seats may be adopted. In this case, a notification that the requested seat is not available may be provided to and displayed on the wristband 300 of the passenger 311 who requested the corresponding seat.

### [Third Modification]

In a case of use of the passenger drone 100 by a group of friends or family, a charter flight may be made available. In this case as well, check-in, weight measurement, and the like are performed in a manner similar to the embodiment.

In a case of a charter flight reserved by a group, if it is determined in S32 of the processes of seat determination (FIG. 12) that the number of candidate seat assignments with the center-of-gravity position being within the acceptable range 106 is two or more, the candidate seat assignments may be presented to a representative of the group to select one of the seat assignments. For example, a plurality of candidate seat assignments may be displayed on a display unit of a terminal (not illustrated) connected to the boarding place LAN, and selection of a seat assignment may be accepted by a selection accepting unit (not illustrated) of the terminal.

### [Fourth Modification]

In relation to the check-in phase (S10), is a total weight determining unit (not illustrated) has determined that the total on-board weight of the passengers 311 having completed the check-in exceeds a predetermined value, a closure instructing unit (not illustrated) may close the check-in even at a point when the number of passengers 311 is smaller than the number of seats.

### [Fifth Modification]

A smartphone of each passenger 311 may be used instead of a wristband 300. A smartphone is an example of the electronic device having the near field communication function, the wireless LAN communication function, and a display. An application program for controlling the operation of the near field communication unit 301, the wireless LAN communication unit 303, and the display 305 as described above of the smartphone 300 may be downloaded and run, so that the smartphone 300 have the functions equivalent to those of the wristband 300.

### [Sixth Modification]

Body feature data other than a face image may be used for recognition (identification) of each passenger 311. Fingerprint reader may be provided in both of the weight measurement booth 230 and the seat spaces 130, and each passenger 311 may be recognized (identified) by fingerprint authentication using fingerprint data.

### [Seventh Modification]

In the seating phase (S16), each wristband reader 113 may determine whether or not the passenger 311 is seated on the correct seat 111. Specifically, if the seat ID read from the wristband 300 by the near field communication unit 121 of the wristband reader 113 match the seat ID assigned to the wristband reader 113 (the seat ID of the seat 111), a seating determination unit (not illustrated) of the wristband reader 113 determines that the passenger 311 is seated on the correct seat 111. In contrast, if the seat IDs do not match each other, it is determined that the passenger 311 is seated on a wrong seat 111. If it is determined that the passenger 311 is seated on a wrong seat 111, the wristband reader 113 instructs at least one of the speaker 115 and the display 119 in the seat space 130 to provide a notification on the seating position being wrong via the on-board LAN. At least one of the speaker 115 and the display 119 in receipt of the notification instruction notifies the passenger 311 of such a message saying, "Are you Mr./Ms. XXX? Please be seated on the seat with seat ID YYY." The operations of the speaker 115 and the display 119 are similar to those in the embodiment.

Each wristband reader 113 may include a microcomputer including an arithmetic unit and a memory. Programs stored in the memory may be executed by the arithmetic unit to implement the functions described above. The seating determination unit (not illustrated) described above may be implemented by the arithmetic unit by executing a program. The seat ID assigned to the wristband reader 113 may be stored in the memory.

### [Eighth Modification]

In the seating phase (S16), whether or not a passenger 311 is seated on the correct seat 111 may be determined on the basis of a wristband ID read from the wristband 300. Specifically, the near field communication unit 121 of the wristband reader 113 reads the wristband ID from the wristband 300. The LAN communication unit 123 of the wristband reader 113 then transmits the read wristband ID to the on-board computer 500.

A wristband ID receiving unit (not illustrated) of the on-board computer 500 receives the wristband ID transmitted from the wristband reader 113 by using the LAN communication device 504. In this process, the wristband ID receiving unit identifies the wristband reader 113 that is the transmission source to determine at which seat 111 the wristband ID has been read.

The output instructing unit 512 refers to the passenger information 522 to identify the seat ID associated with the received wristband ID. If the identified seat ID matches the seat ID of the seat 111 of the wristband reader 113 that is the transmission source, the output instructing unit 512 determines that the passenger 311 is seated on the correct seat 111. If the identified seat ID does not match the seat ID of the seat 111 of the wristband reader 113 that is the transmission source, the output instructing unit 512 determines that the passenger 311 is seated on a wrong seat 111.

### [Ninth Modification]

In a further modification of the eighth modification, the wristband reader 113 may determine on the basis of the wristband ID whether the passenger 311 is seated on the correct seat 111.

Specifically, before boarding is started, a wristband ID transmitting unit (not illustrated) of the on-board computer 500 identifies the wristband ID associated with the seat ID assigned to each wristband reader 113 in the passenger information 522, and transmits the identified wristband ID to the LAN communication unit 123 of the wristband reader 113. The LAN communication unit 123 of the wristband reader 113 stores the received wristband ID in the memory of the microcomputer or the like.

After boarding is started and a passenger 311 gets seated, the near field communication unit 121 of the wristband reader 113 reads the wristband ID from the wristband 300. If the read wristband ID matches the wristband ID stored in the memory, the seating determination unit (not illustrated) of the wristband reader 113 determines that the passenger 311 is seated on the correct seat 111. If the wristband IDs do not match each other, the seating determination unit determines that the passenger 311 is seated on a wrong seat. If it is determined that the passenger 311 is seated on a wrong seat 111, the wristband reader 113 instructs the speaker 115 and the display 119 in the corresponding seat space 130 to provide a notification on the seating position being wrong via the on-board LAN. The operations of the speaker 115 and the display 119 are similar to those in the embodiment.

### [Tenth Modification]

In relation to the seating phase (S16), while examples in which the speaker 115 and the display 119 in the seat space 130 provide a notification on the seating position being wrong have been presented, the notification on the seating position being wrong may be provided by the wristband 300 or the smartphone.

In a case where the on-board computer 500 instructs notification of the seating position being wrong, in a manner similar to transmission of the notification instruction on the seating position being wrong to the speaker 115 and display 119 in the seat space 130 in which seating error is present, the output instructing unit 512 transmits the notification instruction on the seating position being wrong to the wristband reader 113 in the same seat space 130 by using the LAN communication device 504. When the LAN communication unit 123 of the wristband reader 113 has received the instruction to notify the seating position being wrong, the near field communication unit 121 of the wristband reader 113 transfers the notification instruction to the wristband 300.

The near field communication unit 301 of the wristband 300 worn by the passenger 311 seated on the wrong seat receives the notification instruction on the seating position being wrong from the wristband reader 113. In accordance with the notification instruction, the display 305 of the wristband 300 then displays the notification on the seating position being wrong. For example, such a message saying, "You are seated on a wrong seat." or the like is displayed.

The notification instruction on the seating position being wrong may be transmitted from the on-board computer 500 directly to the wristband 300 via the on-board LAN instead of being transmitted via the wristband reader 113. In this case, the wristband 300 to which the notification instruction is to be transmitted is identified in the passenger information 52 by the wristband ID associated with the seat ID read by the wristband reader 113.

In the seventh modification and the ninth modification, the display 305 of the wristband 300 may display the notification on the seating position being wrong.

### [Eleventh Modification]

While examples in which a notification is provided when the seating position is wrong have been presented, such a message saying, "You are seated on the correct seat." May be displayed when the seating position is correct.

### Twelfth Modification]

As described with reference to FIG. 4, an example in which the weight of a passenger 311 and the weight of baggage 313 near the feet of the passenger 311 are measured separately by using the weight measurement part 225a and the weight measurement part 225b has been presented in the embodiment, the weight of the passenger 311 and the weight of the baggage 313 may be measured by one weight measurement part 225. In this case, the center-of-gravity position with the combination of the weights of the passengers 311 and the weights of the baggage 313 is preferably measured at the same time.

For example, the weight of the baggage 313 can be obtained by subtracting the weight measured without the baggage 313 from the weight measured with the baggage 313 placed near the feet. The measurement of weight may be either with the baggage 313 or without the baggage 313 as long as all the measurements are performed in the same manner. Alternatively, measurement may be performed only on the weights of the passengers 311 without measurement of the baggage 313.

### [Thirteenth Modification]

While an example in which only balancing water tanks 702 into which water is to be poured are defined in the balancing water data and the balancing water tanks 702 are used in a full state (a balancing water storage of 100%) has been presented in the embodiment, a balancing water storage smaller than 100% may be set and the balancing water tanks 702 that are not filled up may be used if the passenger drone 100 has an excellent stability of flight attitude.

In this case, the balancing water tanks 702 into which water is to be poured and the percentages of balancing water storage thereof are defined in the balancing water data. The operation of water pouring is performed in such a manner that a balancing water tank 702 into which water is to be poured up to a balancing water storage of less than 100% is once filled with water and thereafter excess water is discharged. Thus, the water pouring control unit 514 opens the drain-side motor-operated valve 712 provided at the lower connector pipe between the balancing water tank 702 with the target storage less than 100% and the drain pipe 714a. This operation causes the water in the balancing water tank 702 to flow through the drain pipe 714a and the drain tank 716 and be discharged through the outlet 718. The percentage of water to be discharged can be adjusted by the length of time during which the drain-side motor-operated valve 712 is open.

### [Fourteenth Modification]

While examples in which whether a passenger is identical to the passenger whose weight was measured is checked by means of face recognition based on an image taken by a camera or fingerprint authentication so as to prevent a swap of wristbands have been presented, the identification on each passenger by means of face recognition based on an image taken by a camera or fingerprint authentication may be omitted if a condition that wristbands are not swappable is met.

### [Supplementary note 1]

An electronic device to be worn by a passenger to board an aircraft including a plurality of seats for passengers, the electronic device comprising:
a reception unit for receiving seat identification information associated with a seat assigned to the passenger;
a display for displaying a seat position based on the received seat identification information; and
a near field communication unit for providing a notification on the seat identification information by near field communication with a reader provided on the seat.

The present invention is not limited to the embodiment and modifications described above, and any component thereof can be modified and embodied without departing from the scope of the invention. Components described in the embodiments and modifications can be combined as appropriate to form various embodiments. Some components may be omitted from the components presented in the embodiments and modifications.

According to the embodiment and the modifications, for determining a seat assignment of a plurality of passengers 311 in a passenger drone 100 (an example of the aircraft), on-board weights (the weight of the passenger 311 and the weight of the baggage 313) of individual passengers 311 are used for calculation of the center-of-gravity position, and the center-of-gravity position is adjusted to become within the acceptable range 106 (an example of the predetermined range), which prevents problems due to deviation of the center-of-gravity position. For example, this facilitates prevention of unstable attitude of the passenger drone 100 and contributes to safe operation.

In addition, because the on-board weight (the weight of the passenger 311 and the weight of the baggage 313) of each passenger 311 is measured by using the measuring seat 211, the balancing position when passengers are on board can be accurately obtained.

In addition, because each wristband 300 worn by or each electronic device such as a smartphone of a passenger 311 is notified of a seat ID assigned to the passenger 311, this makes it easier for the passenger 311 to know the seat 111 to sit on.

In addition, because a seating error is found on the basis of the seat IDs read from the wristbands 300 worn by the passengers 311 or the electronic devices such as smartphones, and the passenger 311 on the wrong seat 111 is notified of the error, this can urge the passenger 311 to sit on the correct seat 111.

Furthermore, because a seat assignment of two or more passengers 311 requesting seats next to each other can be preferentially selected, this improves the customer service quality.

Furthermore, because a seat assignment with a smaller moment of inertia is preferentially selected, this facilitates attitude control of the passenger drone 100.

In addition, when there is no seat assignment with the center-of-gravity position being within the acceptable range 106, the weights of balancers for balance adjustment of the center-of-gravity position of the passenger drone 100 are determined so that the center-of-gravity position becomes within the acceptable range 106, which enables adjustment of the center-of-gravity position to become within the acceptable range 106 even in a case where the center of gravity cannot be adjusted only by the positions of the passengers 311.

## Claims

1. A seat determination system for determining seat assignment of each of a plurality of passengers in an aircraft including a plurality of seats for passengers, the seat determination system comprising:
a weight measuring unit for measuring an on-board weight of each of passengers to board the aircraft, the on-board weight being a weight to be carried by the aircraft;
a calculation unit for calculating a center-of-gravity position of the aircraft when the on-board weights of the passengers are assigned to respective seat positions in each of a plurality of estimated seat assignments; and
a selection unit for selecting a seat assignment with the center-of-gravity position being within a predetermined range from among the estimated seat assignments.

2. The seat determination system according to claim 1, wherein the weight measuring unit measures the on-board weight with a measuring seat shaped like a seat of the aircraft on the basis of a weight of a passenger seated on the measuring seat and a weight of baggage held by the passenger.

3. The seat determination system according to claim 1 or 2, further comprising:
a notification unit for notifying an electronic device worn by each passenger of seat identification information associated with a seat assigned to the passenger in the selected seat assignment.

4. The seat determination system according to claim 3, wherein
the seats of the aircraft are provided with readers to each of which the seat identification information associated with the corresponding seat is assigned, and
the seat determination system further comprises:
an output instructing unit for notifying the electronic device worn by a passenger or an output device provided at a seat of a seating error when the seat identification information read by one of the readers from the electronic device of a passenger seated on the corresponding seat does not match the seat identification information assigned to the reader.

5. The seat determination system according to any one of claims 1 to 4, wherein the selection unit preferentially selects a seat assignment of two or more passengers requesting seats next to each other.

6. The seat determination system according to any one of claims 1 to 5, wherein
the calculation unit calculates a moment of inertia of the aircraft when the on-board weights of the passengers are assigned to the respective seat positions in each of the estimated seat assignments, and
the selection unit preferentially select a seat assignment with a small moment of inertia.

7. The seat determination system according to any one of claims 1 to 6, further comprising:
a determination unit for determining a weight and a position of a balancer for balance adjustment of the center-of-gravity position so that the center-of-gravity position of the aircraft becomes within the predetermined range when no seat assignment with the center-of-gravity position being in the predetermined range is present.

8. A seat determination system for determining seat assignment of each of a plurality of passengers in an aircraft including a plurality of seats for passengers, the seat determination system comprising:
a weight measuring unit for measuring an on-board weight of each of passengers to board the aircraft, the on-board weight being a weight to be carried by the aircraft; and
a determination unit for determining a seat assignment for the passengers so that a center-of-gravity position of the aircraft becomes within a predetermined range on the basis of the on-board weights of the passengers measured by the weight measuring unit.
